# EUROPÄISCHE PATENTANMELDUNG

(11) **EP 2 283 987 A2**
(43) Veröffentlichungstag der Anmeldung: **16.02.2011**
(21) Anmeldenummer: 10008160.3
(22) Anmeldetag: 05.08.2010
(51) Int. Cl.: B29C 44/42, B29C 44/60, B29C 44/18

(54) **Schaumapplikationsvorrichtung für Hohlkammerelemente**

(30) Priorität: 14.08.2009 DE 202009011138 U
(71) Anmelder: aluplast GmbH, 76227 Karlsruhe (DE)
(72) Erfinder: Heilig, Andreas, 76676 Graben-Neudorf (DE)
(74) Vertreter: Lemcke, Brommer & Partner

(57) **Zusammenfassung**

Beschrieben wird eine Schaumapplikationsvorrichtung (1) für Hohlkammerelemente (2), wie Fenster- oder Türrahmen. Die Vorrichtung weist auf: eine Auflage-/Fixiereinheit (3) für wenigstens ein auszuschäumendes Hohlkammerelement (2); optional eine erste Fördereinheit (E), die zum Zuführen des Hohlkammerelements zu der Auflage-/Fixiereinheit ausgebildet ist; wenigstens eine Bereitstellungs- und Einbringeinheit (4) für das in das Hohlkammerelement einzubringende Schaummaterial, die zum Zusammenwirken mit dem in der Auflage-/Fixiereinheit aufgenommenen Hohlkammerelement zwecks Einbringung des Schaummaterials ausgebildet ist; optional wenigstens eine Verschließeinheit (5), die zum Verschließen einer Schaum-Einbringöffnung (2a) in dem Hohlkammerelement nach Einbringung des Schaummaterials ausgebildet ist; und optional eine zweite Fördereinheit (A), die zum Entfernen des ausgeschäumten Hohlkammerelements aus der Auflage-/Fixiereinheit ausgebildet ist.

## Beschreibung

Die vorliegende Erfindung betrifft eine Schaumapplikationsvorrichtung für Hohlkammerelemente, wie Fenster- oder Türrahmen.

Die Anmelderin verwendet seit einiger Zeit ein Verfahren zum Ausschäumen von Hohlkammerelementen, wobei zunächst ein Hohlkammer-Rahmenelement, beispielsweise für ein Fenster oder für eine Tür, aus entsprechenden einzelnen Profilelementen zusammengefügt wird, so dass sich wenigstens eine in Umfangsrichtung des Hohlkammerelements im Wesentlichen durchgängig umlaufende Hohlkammer ergibt. Diese wird anschließend mit einem dämmend wirkenden Schaummaterial, beispielsweise einem Mehrkomponentenschaum, gefüllt, um insbesondere das Entstehen von Kältebrücken im Bereich der Fügestellen der einzelnen Profilelemente zu vermeiden. Darüber hinaus kann eine derartige Ausschäumung auch zur Versteifung des Hohlkammerelements verwendet werden, so dass auf die Verwendung zusätzlicher (metallischer) Aussteifungselemente verzichtet werden kann.

In diesem Zusammenhang kommen an sich bekannte Maschinen zum Einsatz, die für die exakte Dosierung und Vermischung der Komponenten des Schaummaterials sorgen. Ein Arbeitsplatz beispielsweise in der Fensterfertigung kann dann mit einer derartigen Maschine ausgerüstet werden, wobei das Einbringen (die Applikation) des Schaummaterials händisch, das heißt manuell durch einen Arbeiter oder eine Arbeiterin erfolgt.

Andererseits ist es beispielsweise in der Fensterfertigung bekannt, bei großen Herstellmengen teil- und vollverkettete Anlagen einzusetzen. Typische Verkettungen sind dabei insbesondere im Bereich der Einzelstabbearbeitung von Profilelementen vor dem Zusammenfügen (Ablängen auf Gehrung, Bohr- und Fräsarbeiten, Stahleinschub und Verschraubung), beim Fügen in der Schweiß-Putz-Linie (Zusammenfügen der Einzelstäbe im Schweißautomaten, Verputzen der Schweißwülste), beim Anschlagen im Anschlagautomaten sowie beim Einglasen in der Glaslinie bekannt.

In diesem Zusammenhang hat die Anmelderin erkannt, dass die weiter oben beschriebene Misch- und Dosieranlage als Insellösung mit händischer Applikation im Takt derartiger Herstellungslinien nicht mithalten kann.

Der Erfindung liegt daher die Aufgabe zugrunde, eine Vorrichtung der weiter oben genannten Art anzugeben, durch welche bei kleinen und mittleren Ausstoßleistungen ein verbessertes Kosten-Nutzen-Verhältnis resultiert. Bei hohen Ausstoßleistungen soll es die vorliegende Erfindung ermöglichen, das an sich bekannte Verfahren zum Ausschäumen von Hohlkammerelementen in teilweise oder vollständig automatisierte Fertigungslinien einzubinden.

Die Erfindung löst diese Aufgaben mittels einer Schaumapplikationsvorrichtung für Hohlkammerelemente mit den Merkmalen des Anspruchs 1.

Vorteilhafte Weiterbildungen der Erfindung sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß weist eine Schaumapplikationsvorrichtung für Hohlkammerelemente, wie Fenster- oder Türrahmen, die folgenden Komponenten auf:
- eine Auflage-/Fixiereinheit für wenigstens ein auszuschäumendes Hohlkammerelement;
- optional eine erste Fördereinheit, die zum Zuführen des Hohlkammerelements zu der Auflage-/Fixiereinheit ausgebildet ist;
- wenigstens eine Bereitstellungs- und Einbringeinheit für das in das Hohlkammerelement einzubringende Schaummaterial, die zum Zusammenwirken mit dem in der Auflage-/Fixiereinheit aufgenommenen Hohlkammerelement zwecks Einbringung des Schaummaterials ausgebildet ist;
- optional wenigstens eine Verschließeinheit, die zum Verschließen einer Schaum-Einbringöffnung in dem Hohlkammerelement nach Einbringung des Schaum materials ausgebildet ist; und
- optional eine zweite Fördereinheit, die zum Entfernen des ausgeschäumten Hohlkammerelements aus der Auflage-/Fixiereinheit ausgebildet ist.

Die erfindungsgemäße Schaumapplikationsvorrichtung für Hohlkammerelemente (nachfolgend auch kurz als "Vorrichtung" bezeichnet) umfasst also neben den optionalen Fördereinheiten, welche auch durch manuelles Zufördern bzw. Ausfördern ersetzt sein können, zumindest eine Auflage-/Fixiereinheit, eine Verschließeinheit sowie eine Bereitstellungs- und Einbringeinheit für das Schaummaterial. Diese Einheiten stehen untereinander - gegebenenfalls über eine zentrale Steuerungseinheit - in steuerungstechnischer Wirkverbindung, so dass die durch die genannten Einheiten realisierten Arbeitsabläufe automatisch bzw. automatisierbar nacheinander ablaufen können, was zur Lösung der oben genannten Aufgabe beiträgt. Dabei dient die Auflage- und Fixiereinheit zum definierten Halten eines auszuschäumenden Hohlkammerelements, während die Bereitstellungs- und Einbringeinheit das einzubringende Schaummaterial bereitstellt, das heißt mischt und dosiert und über eine entsprechende Schaum-Einbringöffnung in das Hohlkammerelement einbringt. Die optionale Verschließeinheit sorgt dann dafür, dass nach Einbringung des Schaummaterials die genannte Schaum-Einbringöffnung dauerhaft verschlossen wird.

Da die Möglichkeit besteht, die Schaum-Einbringöffnung mit einem Verschlussstopfen zu verschließen, der als ein einseitig öffnendes Ventil ausgebildet ist, kann im Zuge einer besonderen Ausgestaltung der Erfindung die Bereitstellungs- und Einbringeinheit das einzubringende Schaummaterial durch das Ventil in das Hohlkammerelement einbringen. In diesem Fall kann die Verschließeinheit der Schaumapplikationsvorrichtung entfallen, weshalb sie vorstehend als optional gekennzeichnet ist.

Vorteilhafter Weise sieht eine erste Weiterbildung der erfindungsgemäßen Vorrichtung vor, dass die Bereitstellungs- und Einbringeinheit für das Schaummaterial in Abhängigkeit von einem ersten Steuersignal aktivierbar ist, dessen Signalzustand von einem Betriebszustand der Auflage-/Fixiereinheit abhängig ist. Vorteilhafter Weise erzeugt die Auflage-/Fixiereinheit selbst das genannte erste Steuersignal und leitet es an die Bereitstellung- und Einbringeinheit weiter, gegebenenfalls über die erwähnte zentrale Steuerungseinheit. Vorteilhafter Weise zeigt das genannte erste Steuersignal an, dass das Hohlkammerelement korrekt in der Auflage-/Fixiereinheit aufgenommen ist und aktiviert dann vorzugsweise automatisch die Bereitstellungs- und Einbringeinheit, um das Schaummaterial in das Hohlkammerelement einzubringen.

Eine andere Weiterbildung der erfindungsgemäßen Vorrichtung sieht vor, dass die Verschließeinheit in Abhängigkeit von einem zweiten Steuersignal aktivierbar ist, dessen Signalzustand von einem Betriebszustand der Bereitstellungs- und Einbringeinheit für das Schaummaterial abhängig ist. Sinnvoller Weise erzeugt die Bereitstellungs- und Einbringeinheit das genannte zweite Steuersignal und leitet es - gegebenenfalls über die zentrale Steuerungseinheit - an die Verschließeinheit weiter. Vorteilhafterweise zeigt die Bereitstellungs- und Einbringeinheit über das zweite Steuersignal an, dass die Schaumapplikation in das Hohlkammerelement abgeschlossen ist, wobei das genannte zweite Steuersignal dann höchst vorzugsweise zum automatischen Aktivieren der Verschließeinheit verwendet wird, so dass diese die Schaum-Einbringöffnung verschließt, nachdem das Schaummaterial in das Hohlkammerelement eingebracht wurde.

Eine wieder andere Weiterbildung der erfindungsgemäßen Vorrichtung sieht vor, dass die Auflage-Fixiereinheit horizontal oder unter einem Winkel ≤ 85° bezüglich der Horizontalen angeordnet ist. Vorteilhafter Weise umfasst die Auflage-/Fixiereinheit eine Verstellmöglichkeit, so dass der genannte Winkel im Bereich zwischen 0° und 85° variiert werden kann, je nach Anwendungsfall.

Vorteilhafter Weise beträgt der genannte Winkel beim Einfördern der Hohlkammerelemente zunächst 0° und wird dann auf einen Wert ≤ 85° eingestellt.

Im Zuge einer anderen Weiterbildung weist die erfindungsgemäße Vorrichtung im Bereich der Aufnahme-/Fixiereinheit wenigstens ein Fixierelement und/oder wenigstens einen Anschlag für das Hohlkammerelement auf, wobei vorzugsweise das Fixierelement in Abhängigkeit von einer Zuführung des Hohlkammerelements automatisch betätigt ist. Mit anderen Worten, wenn das Hohlkammerelement korrekt und vollständig eingefördert wurde, erfolgt eine automatische Fixierung desselben durch das genannte Fixierelement. Beispielsweise liefert die erste Fördereinheit ein entsprechendes Steuersignal an die Aufnahme-/Fixiereinheit.

Eine wieder andere Weiterbildung der erfindungsgemäßen Vorrichtung sieht vor, dass die Bereitstellungs- und Einbringeinheit für das Schaummaterial eine Antriebseinheit umfasst, die zum Heranführen zumindest der Einbringeinheit, beispielsweise eines Misch- und Dosierkopfes, an die Schaum-Einbringöffnung des Hohlkammerelements ausgebildet ist. Das Heranführen erfolgt vorzugsweise automatisch in Abhängigkeit von dem genannten ersten Steuersignal.

Im Zuge einer anderen Weiterbildung kann die erfindungsgemäße Vorrichtung im Bereich der Bereitstellungs- und Einbringeinheit auch eine Antriebseinheit umfassen, die zum Heranführen zumindest eines Öffnungsmittels, wie eines Bohraggregats oder dergleichen, an das Hohlkammerelement ausgebildet ist. Auch dieses Heranführen kann automatisch in Abhängigkeit beispielsweise von dem ersten Steuersignal erfolgen, um die Schaum-Einbringöffnung in dem Hohlkammerelement zu schaffen.

Weiterhin kann im Zuge einer anderen Weiterbildung der Erfindung auch die Verschließeinheit eine Antriebseinheit umfassen, die zum Einsetzen zumindest eines Verschlusselements in die Schaum-Einbringöffnung des Hohlkammerelements ausgebildet ist. Vorzugsweise erfolgt das Einsetzen hier automatisch in Abhängigkeit beispielsweise von dem genannten zweiten Steuersignal.

Eine besonders vorteilhafte Ausgestaltung der vorliegenden Erfindung sieht vor, dass die weiter oben genannten Antriebseinheiten in Form einer einzigen, gemeinsamen Antriebseinheit realisiert sind, die je nach Bedarf mechanischmotorisch mit der Einbringeinheit, dem Öffnungsmittel bzw. der Verschließeinheit koppelbar ist.

Die erfindungsgemäße Vorrichtung kann in den Fertigungsablauf einer Fenster- oder Türrahmenfertigung integriert sein, wobei vorzugsweise dort bereits vorhandene Einförder-, Ausförder- und/oder Fixiereinrichtungen für die erfindungsgemäße Vorrichtung mitverwendet werden, beispielsweise am Anschlagtisch oder in der Glaspresse.

Die erfindungsgemäße Vorrichtung kann im Zuge einer anderen Weiterbildung der Erfindung auch in die Schweiß-Putz-Linie einer Fenster- oder Türrahmenverkettung integriert sein, vorzugsweise zwischen einem Schweißautomaten und einem Putzautomaten oder hinter dem Putzautomaten. Eine andere Weiterbildung der vorliegenden Erfindung sieht vor, dass die Vorrichtung in den Schweißautomaten oder in den Putzautomaten der Schweiß-Putz-Linie einer Fenster- oder Türrahmenverkettung integriert ist.

Außerdem kann zumindest die Bereitstellungs- und Einbringeinheit einer erfindungsgemäßen Schaumapplikationsvorrichtung einer Mehrzahl von Fertigungslinien zugeordnet sein.

Weitere Eigenschaften und Vorteile der vorliegenden Erfindung ergeben sich aus der nachfolgenden Beschreibung von Ausführungsbeispielen anhand der Zeichnung.
- Figur 1: zeigt eine erste Ausgestaltung der erfindungsgemäßen Vorrichtung; und
- Figur 2: zeigt eine weitere Ausgestaltung der erfindungsgemäßen Vorrichtung nebst Einbindung in eine Fensterfertigung.

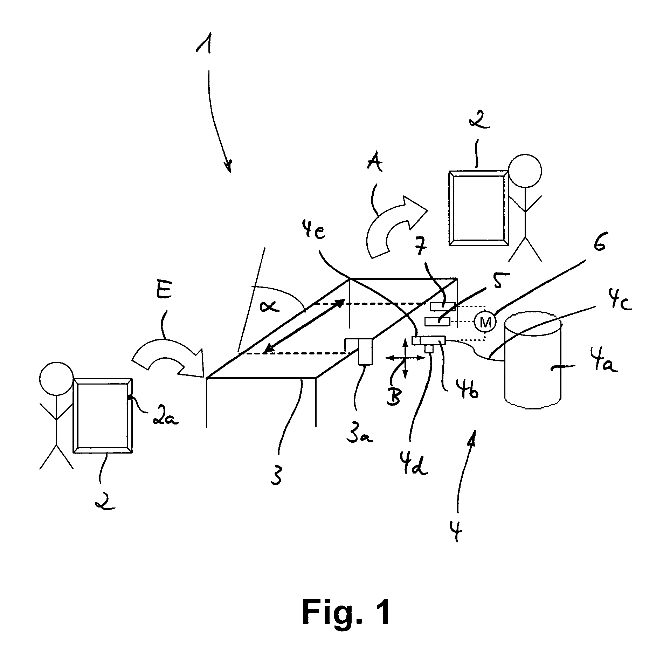

Die in Figur 1 gezeigte Schaumapplikationsvorrichtung für Hohlkammerelemente (nachfolgend auch einfach als "Vorrichtung" bezeichnet), ist in ihrer Gesamtheit mit dem Bezugszeichen 1 bezeichnet. Sie dient zum weitestgehend automatisierten bzw. automatisierbaren Ausschäumen von Hohlkammerelementen 2, insbesondere und ohne Beschränkung von Fenster- oder Türrahmen. Die Vorrichtung 1 umfasst eine Auflage-/Fixiereinheit 3 für wenigstens ein auszuschäumendes Hohlkammerelement 2. Außerdem umfasst die Vorrichtung wenigstens eine Bereitstellungs- und Einbringeinheit 4 für das in das Hohlkammerelement 2 einzubringende Schaummaterial, welches in einem Behälter 4a der Bereitstellungs- und Einbringeinheit 4 enthalten ist. Die Bereitstellungs- und Einbringeinheit 4 ist zum Zusammenwirken mit dem in der Aufnahme-/Fixiereinheit 3 aufgenommenen Hohlkammerelement 2 zwecks Einbringung des Schaummaterials ausgebildet, worauf weiter unten noch genauer eingegangen wird.

Außerdem umfasst die Vorrichtung 1 wenigstens eine Verschließeinheit 5, die zum Verschließen einer nur angedeuteten Schaum-Einbringöffnung 2a in dem Hohlkammerelement 2 ausgebildet ist, nachdem das Schaummaterial in das Hohlkammerelement 2 eingebracht wurde.

Die Auflage-/Fixiereinheit 3 weist ein Fixierelement 3a auf, welches als Spannelement in Form eines mit Druckluft beaufschlagten Kolbens ausgebildet sein kann. Weiterhin besteht die Auflage- und Fixiereinheit im Wesentlichen aus einer ebenen Auflagefläche für das auszuschäumende Hohlkammerelement 2, welche horizontal oder mit einem einstellbaren Winkel α um bis zu 85° geneigt zur Horizontalen angeordnet sein kann.

Zum Einfördern der Hohlkammerelemente 2 in die Vorrichtung 1 steht ein Antrieb zur Verfügung, der beispielsweise in Form eines Förderbandes oder als pneumatisch betriebener Mitnehmer ausgebildet sein kann und der in Figur 1 mittels des Pfeils E nur symbolisch dargestellt ist. Wie der Fachmann erkennt, ist der genannte Einförderantrieb keinesfalls auf die vorstehend exemplarisch genannten Ausführungsformen beschränkt. Er kann außerdem durch manuelles Einfördern ersetzt werden.

Das bereits erwähnte Spannelement 3a dient zum Fixieren der Hohlkammerelemente 2 in der Vorrichtung 1. Alternativ oder zusätzlich zu dem bereits erwähnten Spannelement 3a kann dort zumindest ein fester Anschlag für das Hohlkammerelement 2 vorgesehen sein, welcher in der Figur 1 nicht explizit dargestellt ist.

Die Bereitstellungs- und Einbringeinheit 4 weist neben dem bereits angesprochenen Behälter 4a für das Schaummaterial noch einen Dosier- und Mischkopf 4b auf, welcher über eine Schaummaterial-Zuleitung 4c mit dem Behälter 4a verbunden ist. Zum Heranführen zumindest des Misch- und Dosierkopfes 4d der Bereitstellungs- und Einbringeinheit 4 an die Schaum-Einbringöffnung 2a eines in der Vorrichtung 1 aufgenommenen Hohlkammerelements 2 ist eine Antriebseinheit 6 vorgesehen, die ohne Beschränkung als pneumatisch betätigter Kolben, Linearantrieb, Zahnstangenantrieb oder dergleichen ausgebildet sein kann. Vorzugsweise ist der Misch- und Dosierkopf 4a durch die genannte Antriebseinheit 6 in Richtung der Pfeile B relativ zu der Vorrichtung 1 bzw. dem darin aufgenommenen Hohlkammerelement 2 beweglich, um das Schaummaterial durch die Schaum-Einbringöffnung 2a in das Hohlkammerelement 2 einbringen zu können. Alternativ ist es auch möglich, die Antriebseinheit 6 selbst relativ zu der Auflage-/Fixiereinheit 3 beweglich auszugestalten, so dass anschließend eine Bewegbarkeit des Misch- und Dosierkopfes 4b in nur einer Raumrichtung ausreicht, um auch unterschiedlich positionierte Schaum-Einbringöffnungen 2a von Hohlkammerelementen 2 flexibel anfahren zu können.

Optional kann die Antriebseinheit 6 oder eine vergleichbare zusätzliche Antriebseinheit (nicht gezeigt) mit einem Öffnungsmittel 7, wie einem Bohraggregat oder dergleichen, ausgerüstet sein, um auf diese Weise eine Schaum-Einbringöffnung 2a in dem Hohlkammerelement 2 vor Ort herzustellen.

Die Antriebseinheit 6 kann mit einem nicht gezeigten Anschraubflansch oder dergleichen ausgerüstet sein, um wahlweise den Misch- und Dosierkopf 4b, die Verschließeinheit 5 oder das Öffnungsmittel 7 mit der Antriebseinheit 6 koppeln zu können. Die Verschließeinheit 5 und/oder die Öffnungsmittel 7 können alternativ auch (jeweils) einen eigenen Antrieb aufweisen. Optional weist die Vorrichtung 1 bei Bezugszeichen 4d vorteilhafter Weise noch Bestimmungsmittel für die einzubringende Art und/oder Menge an Schaummaterial auf, welche funktional zu der Bereitstellungs- und Einbringeinheit 4 zählen. Die genannten Bestimmungsmittel 4d können in Form eines Barcode-Scanners, eines RFID-Lesegeräts oder einer anderen an sich bekannten Form zum Erfassen einer an dem Hohlkammerelement 2 angebrachten Information ausgebildet sein, aus welcher sich die einzubringende Art und/oder die einzubringende Menge an Schaummaterial ergibt. Es besteht jedoch zusätzlich oder alternativ die Möglichkeit, die Vorrichtung 1 mit einem nicht gezeigten Bedienpanel auszustatten, beispielsweise an der Bereitstellungs- und Einbringeinheit 4, über welches Art und Menge des Schaummaterials händisch eingebbar ist.

Das Einbringen des Schaummaterials erfolgt im Rahmen der vorliegenden Erfindung vorzugsweise automatisiert, sobald der Misch- und Dosierkopf 4b an der Applikationsöffnung 2a anliegt. Zu diesem Zweck beinhaltet der Misch- und Dosierkopf 4b vorzugsweise einen entsprechenden Sensor oder Signalgeber 4e, welcher das genannte Anliegen an der Schaum-Einbringöffnung 2a in steuerungstechnisch verwertbarer Form signaltechnisch anzeigt. Mit anderen Worten, sobald der Misch- und Dosierkopf 4b im Bereich der Schaum-Einbring-öffnung 2a an dem Hohlkammerelement 2 anliegt, erfolgt durch die Bereitstellungs- und Einbringeinheit 4 automatisch das Einbringen des Schaummaterials in das Hohlkammerelement 2. Alternativ ist es jedoch auch möglich, das Einbringen des Schaum materials manuell zu veranlassen, beispielsweise über das bereits erwähnte Bedienpanel.

Nach erfolgtem Einbringen des Schaummaterials in das Hohlkammerelement 2 wird die Antriebseinheit 6 mit der Verschließeinheit 5 motorisch-mechanisch gekoppelt, und die Verschließeinheit 5 führt ein nicht gezeigtes Verschlussteil (Stopfen) zur Schaum-Einbringöffnung 2a und fixiert dieses darin. Je nach Art und Form der Einbringöffnung 2a bzw. des Verschlussteils kann dieses Fixieren als Verklemmen, Verrasten oder dergleichen ausgebildet sein.

Wie bereits weiter oben erwähnt wurde, kann vorgesehen sein, in der Schaum-Einbringöffnung 2a ein einseitig öffnendes Ventil vorzusehen, durch welches das Schaummaterial in das Hohlkammerelement 2 eingebracht wird. Im Falle einer derartigen Ausgestaltung kann die Verschließeinheit 5 entfallen bzw. wird nach erfolgtem Einbringen des Schaummaterials entsprechend nicht angesteuert.

Zum Ausfördern der Hohlkammerelemente 2 nach erfolgter Schaumeinbringung umfasst die Vorrichtung 1 optional einen durch den Pfeil A symbolisierten Antrieb, der wie der Antrieb E ohne Beschränkung als Förderband oder pneumatisch betriebener Mitnehmer ausgebildet sein kann. Auch der Antrieb A kann durch manuelles Ausfördern ersetzt werden.

Wie bereits angedeutet, besitzt die Vorrichtung 1 an den Schnittstellen der einzelnen durch sie realisierten Arbeitsschritte bestimmte Sensormittel, welche das Ende eines jeweiligen Arbeitsschrittes anzeigen oder quittieren und dann den jeweils nächsten Arbeitsschritt freigeben. Beispielsweise zeigt der Sensor 4e an, dass der Misch- und Dosierkopf 4b im Bereich der Schaumeinbringöffnung 2a an dem Hohlkammerelement 2 anliegt, um anschließend das Einbringen des Schaummaterials freizugeben bzw. automatisch zu starten.

In ihrer Funktion vergleichbare Sensormittel können insbesondere an folgenden Stellen innerhalb der Vorrichtung 1 vorgesehen sein: In Wirkverbindung mit dem Einförderantrieb E (zeigt an, dass das Hohlkammerelement 2 in die Vorrichtung 1 eingefördert wurde); in Wirkverbindung mit der Auflage-/Fixiereinheit 3 (zeigt an, dass das Hohlkammerelement 2 korrekt aufgelegt wurde und gibt das Fixierelement 3a frei bzw. startet dieses automatisch); in Wirkverbindung mit der Verschließeinheit 5 (zeigt an, dass das Hohlkammerelement 2 nach Einbringen des Schaummaterials verschlossen wurde und gibt den Ausförderantrieb A frei bzw. startet diesen automatisch; in Wirkverbindung mit dem Ausförderantrieb A (zeigt an, dass das Hohlkammerelement 2 die Vorrichtung 1 verlassen hat).

Zusätzlich oder alternativ kann vorgesehen sein, dass einige oder alle der genannten Arbeitsschritte manuell zu quittieren und/oder freizugeben sind, beispielsweise über das bereits erwähnte Bedienpanel.

Die durch die erwähnten Sensormittel erzeugten Sensor- oder Steuersignale gelangen vorzugsweise zu einer zentralen Steuerungseinheit der Vorrichtung 1, die vorliegend aus Gründen der Übersichtlichkeit nicht dargestellt ist, zumal sie als solche dem Fachmann bekannt ist. Die genannte zentrale Steuereinheit analysiert und verwaltet die genannten Steuersignale und sorgt so für einen reibungslosen Ablauf der beschriebenen Arbeitsschritte.

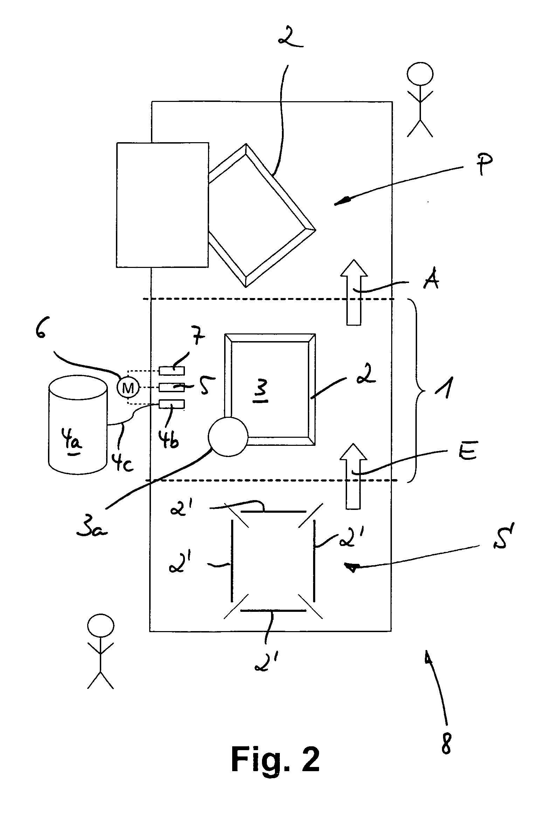

Anhand von Figur 2 ist dargestellt, wie sich die Vorrichtung 1 in eine Fertigungslinie 8 für Hohlkammerelemente 2, beispielsweise und ohne Beschränkung zur Herstellung von Fensterrahmen bzw. Fenstern, einbinden lässt.

Gleiche Bezugszeichen in den Figuren 1 und 2 bezeichnen jeweils gleiche oder gleichwirkende Elemente.

Bei Bezugszeichen 7 ist eine Fertigungslinie für die Fensterfertigung dargestellt. Bezugszeichen S bezeichnet einen Schweißautomat, in dem einzelne Profilelemente 2' zu einem Hohlkammerelement (Fensterrahmen) zusammengefügt werden. Bezugszeichen P bezeichnet einen Putzautomaten, der zum Verputzen der beim Zusammenfügen der Profilelemente 2' zu dem Fensterrahmen 2 entstandenen Schweißwülste dient. Zwischen Schweißautomat S und Putzautomat P ist eine Vorrichtung 1 geschaltet, wie sie weiter oben anhand von Figur 1 detailliert beschrieben wurde.

Es liegt im Rahmen der vorliegenden Erfindung, dass eine derartige Vorrichtung 1 gleichzeitig oder zeitversetzt mehrere Fertigungslinien 8 bedient, welche sich dann als verkettete Fertigungslinien bezeichnen lassen. Zu diesem Zweck können bestimmte Komponenten der Vorrichtung 1 mehrfach vorhanden sein, oder die Vorrichtung 1 kann mit einem gegenüber den Fertigungslinien 8 erhöhten Takt arbeiten und so zeitversetzt mehrere Fertigungslinien bedienen.

Alternativ zu der Darstellung in Figur 2 kann die Vorrichtung 1 in den Schweißautomat S oder in dem Putzautomat P selbst integriert sein. Dabei können vorteilhafter Weise die in dem jeweiligen Automaten bereits vorhandene Fördereinrichtungen und/oder Fixierelemente mitverwendet werden.

Im Zuge einer anderen Weiterbildung der vorliegenden Erfindung kann die Vorrichtung 1 auch in jeder anderen Stelle im Fertigungsablauf angeordnet sein, wo sich die genannten Fördervorrichtungen und/oder Fixierelemente befinden, beispielsweise am so genannten Anschlagtisch und/oder der so genannten Glaspresse. Selbstverständlich muss in diesem Zusammenhang nicht auf die erwähnten Fördervorrichtungen und/oder Fixierelemente zurückgegriffen werden, sondern diese können durch die Vorrichtung 1 selbst bereitgestellt werden.

Schließlich ist es auch möglich, im Rahmen der Vorrichtung 1 eine an sich bekannte Variante der Bereitstellungs- und Einbringeinheit 4 vorzusehen, welche mit mehreren Misch- und Dosierköpfen 4b ausgestattet ist. Wenn die Vorrichtung 1 dann eine entsprechende Mehrzahl an Auflage-/Fixiereinheiten 3, Verschließeinheiten 5 usw. aufweist, können ebenfalls mehrere verkettete Fertigungslinien 8 in möglichst kurzer räumlicher Entfernung zur eigentlichen Schaum-Einbringposition versorgt werden.

## Patentansprüche

1. Schaumapplikationsvorrichtung (1) für Hohlkammerelemente (2), wie Fenster- oder Türrahmen, aufweisend:
- eine Auflage-/Fixiereinheit (3) für wenigstens ein auszuschäumendes Hohlkammerelement (2);
- optional eine erste Fördereinheit (E), die zum Zuführen des Hohlkammerelements zu der Auflage-/Fixiereinheit ausgebildet ist;
- wenigstens eine Bereitstellungs- und Einbringeinheit (4) für das in das Hohlkammerelement einzubringende Schaummaterial, die zum Zusammenwirken mit dem in der Auflage-/Fixiereinheit aufgenommenen Hohlkammerelement zwecks Einbringung des Schaummaterials ausgebildet ist;
- optional wenigstens eine Verschließeinheit (5), die zum Verschließen einer Schaum-Einbringöffnung (2a) in dem Hohlkammerelement nach Einbringung des Schaummaterials ausgebildet ist; und
- optional eine zweite Fördereinheit (A), die zum Entfernen des ausgeschäumten Hohlkammerelements aus der Auflage-/Fixiereinheit ausgebildet ist.

2. Schaumapplikationsvorrichtung (1) nach Anspruch 1, **dadurch gekennzeichnet, dass** die Bereitstellungs- und Einbringeinheit (4) für das Schaummaterial in Abhängigkeit von einem ersten Steuersignal aktivierbar ist, dessen Signalzustand von einem Betriebszustand der Auflage-/Fixiereinheit (3) abhängig ist, wobei vorzugsweise die Erzeugung des ersten Steuersignals und/oder die Aktivierung der Bereitstellungs- und Einbringeinheit automatisiert ist.

3. Schaumapplikationsvorrichtung (1) nach Anspruch 2, **dadurch gekennzeichnet, dass** das erste Steuersignal einen Signalzustand zum Aktivieren der Bereitstellungs- und Einbringeinheit (4) aufweist, wenn die Bereitstellungs- und Einbringeinheit für das Schaummaterial im Bereich der Schaum-Einbringöffnung (2a) an dem Hohlkammerelement (2) anliegt.

4. Schaumapplikationsvorrichtung (1) nach mindestens einem der Ansprüche 1 bis 3, **dadurch gekennzeichnet, dass** die Verschließeinheit (5) in Abhängigkeit von einem zweiten Steuersignal aktivierbar ist, dessen Signalzustand von einem Betriebszustand der Bereitstellungs- und Einbringeinheit (4) für das Schaummaterial abhängig ist, wobei vorzugsweise die Erzeugung des zweiten Steuersignals und/oder die Aktivierung der Verschließeinheit automatisiert ist, und wobei höchst vorzugsweise das zweite Steuersignal einen Signalzustand zum Aktivieren der Verschließeinheit aufweist, wenn durch die Bereitstellungs- und Einbringeinheit das Schaummaterial in das Hohlkammerelement (2) eingebracht wurde.

5. Schaumapplikationsvorrichtung (1) nach mindestens einem der Ansprüche 1 bis 4, **dadurch gekennzeichnet, dass** die Auflage-/Fixiereinheit (3) horizontal oder unter einem Winkel (α) kleiner oder gleich 85° bezüglich der Horizontalen angeordnet ist.

6. Schaumapplikationsvorrichtung (1) nach mindestens einem der Ansprüche 1 bis 5, **dadurch gekennzeichnet, dass** die Auflage-/Fixiereinheit (3) wenigstens ein Fixierelement (3a) und/oder wenigstens einen Anschlag für das Hohlkammerelement (2) aufweist, wobei vorzugsweise das Fixierelement in Abhängigkeit von einer Zuführung (E) des Hohlkammerelements automatisch betätigt ist.

7. Schaumapplikationsvorrichtung (1) nach mindestens einem der Ansprüche 1 bis 6, **dadurch gekennzeichnet, dass** die Bereitstellungs- und Einbringeinheit (4) für das Schaummaterial eine Antriebseinheit (6) umfasst, die zum Heranführen zumindest der Einbringeinheit an die Schaum-Einbringöffnung (2a) des Hohlkammerelements (2) ausgebildet ist, vorzugsweise zum automatischen Heranführen in Abhängigkeit von dem ersten Steuersignal gemäß Anspruch 2 oder 3.

8. Schaumapplikationsvorrichtung (1) nach mindestens einem der Ansprüche 1 bis 7, **dadurch gekennzeichnet, dass** die Bereitstellungs- und Einbringeinheit (4) für das Schaummaterial eine Antriebseinheit (6) umfasst, die zum Heranführen zumindest eines Öffnungsmittels (7) an das Hohlkammerelement (2) ausgebildet ist, vorzugsweise zum automatischen Heranführen in Abhängigkeit von dem ersten Steuersignal gemäß Anspruch 2 oder 3, um die Schaum-Einbringöffnung (2a) in dem Hohlkammerelement zu schaffen.

9. Schaumapplikationsvorrichtung (1) nach mindestens einem der Ansprüche 1 bis 8, **dadurch gekennzeichnet, dass** die Bereitstellungs- und Einbringeinheit (4) für das Schaummaterial Bestimmungsmittel (4d) für die einzubringende Art und/oder Menge an Schaummaterial umfasst, vorzugsweise im Form eines Barcode-Scanners oder dgl. zum Erfassen einer an dem Hohlkammerelement (2) angebrachten diesbezüglichen Information.

10. Schaumapplikationsvorrichtung (1) nach mindestens einem der Ansprüche 1 bis 9, **dadurch gekennzeichnet, dass** die Verschließeinheit (5) eine Antriebseinheit (6) umfasst, die zum Einsetzen zumindest eines Verschlusselements in die Schaum-Einbringöffnung (2a) des Hohlkammerelements (2) ausgebildet ist, vorzugsweise zum automatischen Einsetzen in Abhängigkeit von dem zweiten Steuersignal gemäß Anspruch 4.

11. Schaumapplikationsvorrichtung (1) nach mindestens zweien der Ansprüche 7, 8 und 10, **dadurch gekennzeichnet, dass** die dort genannten Antriebseinheiten (6) in Form einer einzigen, gemeinsamen Antriebseinheit realisiert sind.

12. Schaumapplikationsvorrichtung (1) nach mindestens einem der Ansprüche 1 bis 11, **dadurch gekennzeichnet, dass** sie in den Fertigungsablauf einer Fenster- oder Türrahmenfertigung (8) integriert ist, vorzugsweise unter Verwendung bereits vorhandener Einförder-, Ausförder- und/oder Fixiereinrichtungen, beispielsweise am Anschlagtisch oder in der Glaspresse.

13. Schaumapplikationsvorrichtung (1) nach mindestens einem der Ansprüche 1 bis 12, **dadurch gekennzeichnet, dass** sie in die Schweiß-Putz-Linie einer Fenster- oder Türrahmenfertigung (8) integriert ist, vorzugsweise zwischen einen Schweißautomaten (S) und einen Putzautomaten (P) oder hinter dem Putzautomaten.

14. Schaumapplikationsvorrichtung (1) nach mindestens einem der Ansprüche 1 bis 13, **dadurch gekennzeichnet, dass** sie in den Schweißautomaten (S) oder in den Putzautomaten (P) der Schweiß-Putz-Linie einer Fenster- oder Türrahmenfertigung (8) integriert ist, vorzugsweise unter Verwendung von deren Einförder-, Ausförder- und/oder Fixiereinrichtungen.

15. Schaumapplikationsvorrichtung (1) nach mindestens einem der Ansprüche 1 bis 14, **dadurch gekennzeichnet, dass** zumindest die Bereitstellungs- und Einbringeinheit (4) einer Mehrzahl von Fertigungslinien (8) zugeordnet ist.
